Europäisches Patentamt

European Patent Office

Office européen des brevets

(19)

(11) Publication number: **0 106 625**
A2

(12) **EUROPEAN PATENT APPLICATION**

(21) Application number: 83306027.0

(22) Date of filing: 05.10.83

(51) Int. Cl.³: **B 21 C 37/12**
**B 29 D 23/12**

(30) Priority: 06.10.82 US 433188

(43) Date of publication of application:
25.04.84 Bulletin 84/17

(84) Designated Contracting States:
BE DE FR GB IT SE

(71) Applicant: HERCULES INCORPORATED
Hercules Plaza
Wilmington Delaware 19899(US)

(72) Inventor: Fertig, David Wright
1420 Funderburg St.
Keyser West Virginia 26726(US)

(72) Inventor: Skidmore, Paul Harold
152 Ormond St.
Frostburg Maryland 21532(US)

(74) Representative: De Minvielle-Devaux, Ian Benedict
Peter et al,
CARPMAELS & RANSFORD 43, Bloomsbury Square
London WC1A 2RA(GB)

(54) Strip wound tubular bodies with light weight core.

(57) An improved strip wound tubular body is disclosed in which a rib section is carried between concentric cylindrical sections of metal strip windings. The rib section dramatically increases wall buckling resistance without significantly adding to the weight of the tube. The improved tubular body is particularly useful for rocket motor canisters and cases.

Manufacture of the improved tubular bodies is also disclosed. The manufacture includes adhesively bonding the strip windings and rib section together with curable adhesive. Use of an aluminum mandrel heated from inside to effect the cure of high temperature adhesive is disclosed. Heating from within the mandrel fixes the rib section during such a cure. Use of liquid adhesive in the manufacture is also disclosed. The liquid adhesive may be a room temperature adhesive.

FIG. 1

-1-

STRIP WOUND TUBULAR BODIES
WITH LIGHT WEIGHT CORE

This invention relates to tubular bodies formed by winding metal strips about a mandrel and suitable for use as rocket motor cases missile canisters, and other such tubular vessels where tube wall strength and weight are important.

Strip-winding is an established art for making metal tubes suitable for such applications as rocket motor cases. See, for example, U.S. Patents 3,044,256 and 3,230,122 as well as UK Patents 747,194; 884,578 and 898,195, which disclose tubular metal bodies formed of a plurality of adhesively bonded layers of helically-wound strip metal, in which adjacent edges of the metal strip in one layer are displaced with reference to adjacent edges of the strip in an adjacent layer so as to avoid any alignment of mating edges in adjacent layers. The strip winding process as described in these patents forms precisely round and straight tubes at low cost. When high-strength steel strips are used, the resulting thin-walled, high-performance tubes are light in weight and competitive on a cost basis with filament reinforced composite tubes.

However, many applications of light weight tubes also require that the tubes resist substantial wall buckling forces. Such resistance is proportional to the wall thickness cubed. Conventional strip wound tubes are unsuited to these applications because when additional layers of the steel strips are added to achieve sufficient buckling resistance, the corresponding increases in weight and cost render the finished tubes uncompetitive.

Conventional thin-walled strip-wound tubes are also subject to denting, puncture or other potentially serious damage from impact with hard objects. Such vulnerability increases the hazards of deploying canisters or rockets that employ these tubes and reduces their reliability. It would be desirable, to increase the impact resistance of strip-wound tubes or at least to minimize the effects of such impacts.

Also it would be desirable, in many circumstances, to have the end fittings for connections to other bodies integrally attached or attachable without increasing the diameter of the finished tube, instead of being applied to the surface of the strip-wound tubes according to conventional practice.

According to the invention, a cylindrical tubular metal body that has increased resistance to buckling without undue weight penalties, that is less vulnerable to impact damage, and that can be supplied with integral end fittings, includes a tube of known construction formed of a plurality of adhesively bonded layers of helically-wound strip metal, (in which adjacent edges of the metal strip in one layer are displaced with reference to adjacent edges of the strip in an adjacent layer so as to avoid any alignment of mating edges in adjacent layers), and it is characterized in that the outer surface of the tube is surrounded by and adhesively bonded to a cylindrical rib section having a cellular structure, and the rib section is surrounded by a second tube having the same structure as the other tube and having its plurality of strip metal layers helically wound around the rib section, each of the tubes having a radial dimension that is less than that of the rib section and a weight that is greater than that of the rib section.

The addition of the rib section and a second strip-wound tube according to the invention dramatically improves the wall buckling resistance of the tubular bodies as compared to a minimal weight increase resulting from its use. The preferred materials suitable for the rib section are formable metallic honeycomb having hexagonal or rectilinear cells.

Preferably, the bonding between the tubes and the rib section contains adhesive from a layer of strip wound tape adhesive.

Figure 1 is a perspective of the strip wound canister barrel 10 of this invention. The drawing shows the canister barrel 10 broken away between its ends 13,31 for convenience of illustration.

Figure 2 is an enlarged cross-section of the wall of the canister barrel of Figure 1 taken along 2-2 of Figure 1.

Figures 3 and 4 are cross-sections of the aft and forward ends 13,31 of the canister barrel 10 respectively taken along 3-3 and 4-4 of Figure 1.

Figures 5 and 6 show respectively the antenna housing of the canister barrel in elevation and in the cross-section taken along 6-6 of Figure 5.

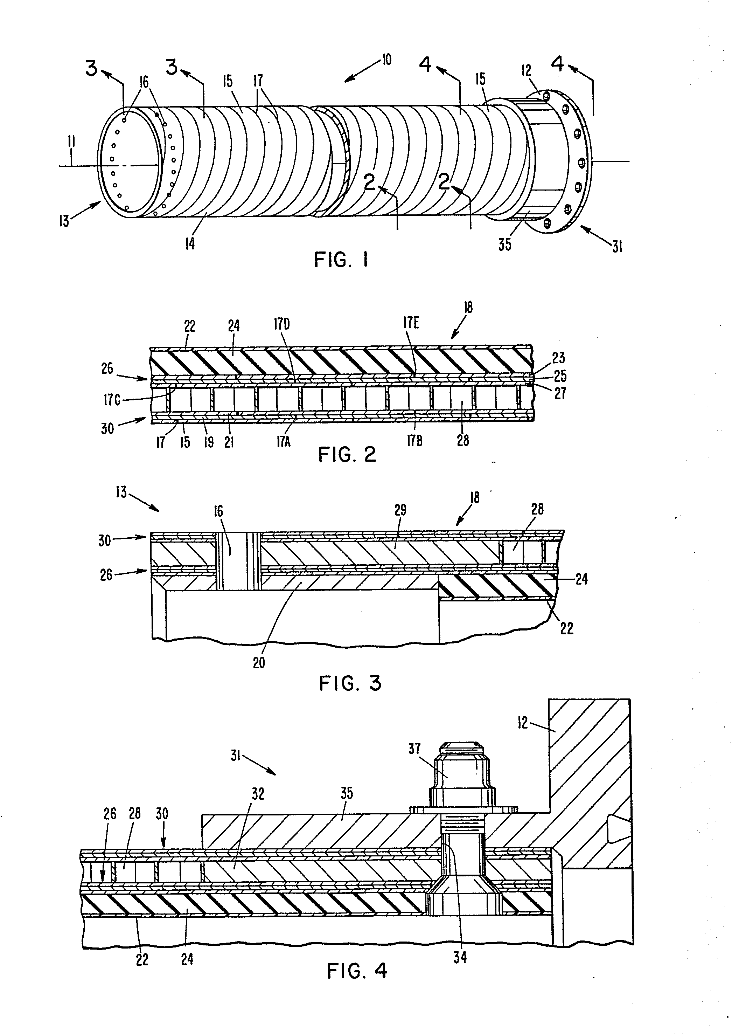

Figure 1 schematically depicts, in perspective, a canister barrel 10 according to this invention. The canister barrel 10 represents the launch canister for a strategic missile, without such conventional canister assembly items as the forward seal and the antenna assembly. The canister barrel 10 has a diaphram mounting flange 12 bolted to tubular section 14 at the forward end 31. Holes 16 through the other (aft) end 13 of tube section 14 permit attachment to a support such as the bulkhead of a vessel.

Metal strip 15, the edges of which are spaced by a gap 17, spirals about the central longitudinal axis 11 of canister barrel 10 as is depicted in Figure 1. This continuous strip 15 is the exterior of the outer cylindrical strip wound section of canister barrel 10.

Figure 2 is a typical cross-section of the wall 18 of canister barrel 10. Shown in Figure 2 are sections of metal strips 15, 19 and 21 which strips make up the aforementioned strip wound, outer cylindrical section designated as 30. Also seen in this cross-section of wall 18 is inner cylindrical section 26, made up of strips 23, 25 and 27.

The metal strips 15, 19, 21, 23, 25 and 27 each consist of a single strip of metal. Gaps 17, 17A and 17B spiral about the tube section 14 in each of the respective planes of the strips 15, 19 and 21. Likewise, gaps 17C, 17D and 17E are between the respective adjacent edges of each of the strips 23, 25 and 27 and spiral about the tube section 14 in each of the three cylindrical planes of these strips 23, 25 and 27. Gaps 17, 17A, 17B, 17C, 17D, 17E each contain adhesive.

Honeycomb 28 is sandwiched between cylindrical sections 26 and 30 of the aforementioned metal strips. In addition, wall 18 as shown in Figure 2 further comprises rubber insulator 24 and fluorinated hydrocarbon liner 22 adhesively bonded thereto. Liner 22 and the rubber insulator 24 are concentric inside tube section 14 between its ends 13, 31.

Figures 3-6 are additional cross sectional views of canister barrel 10 shown in Figure 1. In the drawings of Figures 3-6, however, the gaps 17, 17A, 17B, 17C, 17D, and 17E are not illustrated for simplicity.

Figure 3 is a cross section of the aft end 13 of tubular section 14. The wall 18 at the aftmost part of this aft end 13 comprises cylindrical metal sleeve 20, inner, cylindrical section 26, cylindrical spacer 29 and outer, cylindrical section 30.

Metal sleeve 20 in Figure 3 is a hollow tube having inner and outer surfaces, the outer of which surfaces is bonded to the contiguous, inner surface of strip windings 26, i.e. strip 23 depicted in Figure 2. Metal sleeve 20 serves as a rigid core for mounting an end group fitting to this aftmost end of tube section 14. Forward of cylindrical metal sleeve 20 and extending around the inside of tubular section 14 are the adhesively bonded together liner 22 and insulator 24. The outer surface of insulator 24 is adhesively bonded to the inner surface of strip 23.

Figure 4 is a cross section of the forward end of canister barrel 10 and shows the mounting of diaphram flange 12 to tube section 14. This forward end of tube section 14 comprises the liner 22, the rubber insulator 24, the three strip wound metal layers of inner cylindrical section 26 and the three strip wound layers of outer cylindrical section 30. Bonded between these strip wound layers is honeycomb 28 and at the forward most part of forward end 31, the metallic sleeve 32. Sleeve 32 has mounting holes, e.g. 34 for bolting diaphram flange 12 to tube section 14 by means of bolt such as 37 (not shown in Figure 1).

Diaphram flange 12 serves to retain a sealing flange for closing the end 31 of canister barrel 10. If desired, the cylindrical portion 35 of flange 12 can serve as sleeve 32, thereby reducing the complexity of this end fitting.

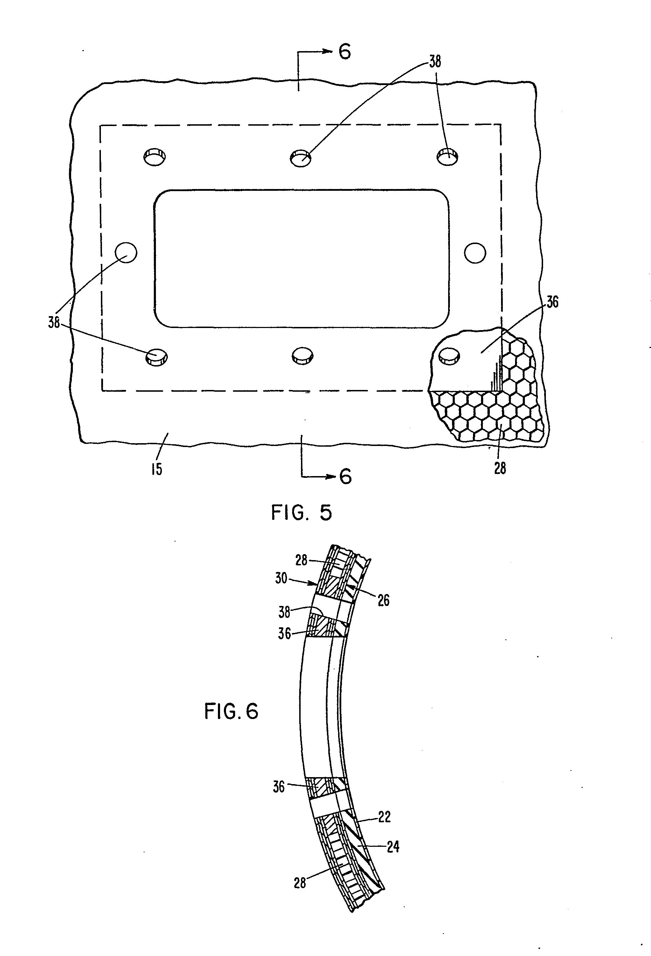

Figures 5 and 6 show the region of canister barrel 10 which is cut out to allow antenna placement in connection with canister deployment. Antenna mounting flange 36 is added to canister barrel 10 during fabrication thereof. Mounting flange 36 has a thickness corresponding to that of honeycomb 28 and a curvature corresponding to that of the cylindrical strip wound section 26, as seen better in Figure 56. Holes 38 serve for mounting the antenna assembly (not shown). The hexagonal cell structure of honeycomb 28 is shown in Figure 5.

In the process of making cylindrical strip sections such as 26,30 (as hereinbefore identified), each of the several metal strips is wound about a mandrel at an angle A wherein the angle A is defined as the angle between the intersection of (a) the longitudinal centerline of the strip being layed on the mandrel and (b) a line which is both parallel to the central longitudinal axis of the mandrel and coincident with the surface on which the strip is being layed. The angle A can be calculated by the relationship $A = 90 - \text{Arc Sin} \frac{W+G}{C}$ where W is the strip width; G is the distance or gap between the adjacent edges of the strip that is to be wound about the mandrel; and C is the circumference of the winding surface, i.e. mandrel plus any additional increase due to elastomer, other strip windings on the mandrel etc. The width W of the strip is dependent on the strip material chosen; the circumference C is also fixed by the tube diameter desired; and the gap G is typically selected to be between 30 and 50 mils, e.g. 40 mils, for tubular bodies such as canister barrel 10 herein before discussed.

In a relatively simple practice of the process of this invention, a lathe type applicator carries a rotatable spool of the metal strip. The lathe applicator translates along the longitudinal axis of a mandrel while the mandrel rotates at a speed so coordinated therewith that adjacent edges of the strip are layed with the gap G therebetween. Thus, with each completed rotation of the mandrel, the lathe type applicator has translated the distance $\frac{W+G}{\sin A}$ along the central longitudinal axis of the mandrel, where W, G and A are hereinbefore defined.

This results in the gap G of consistent dimension spiraling around the mandrel in the plane of each of the strip wound layers.

In fabrication of a canister barrel such as 10 of Figures 1-6, an aluminum mandrel is preferably selected, particularly when adhesive tape, as hereinafter disclosed, is used in the fabrication. If the finished tube is to be insulated by an insulator/liner combination such as 22,24 of canister barrel 10, then these are preferably layed on the mandrel using conventional techniques prior to strip winding. Alternatively, insulator 22, 24 may be omitted or added after the strip winding operations.

Each metal strip that is wound around the mandrel may be coated with adhesive, or, alternatively, layed on a layer of strip wound adhesive. The strip wound adhesive comprises B-staged adhesive in the form of a tape which is spiraled around in the mandrel to form an adhesive layer. Thus, in forming an inner cylindrical, strip wound section such as 26 shown in Figure 2-6 using this tape adhesive, a layer of adhesive is first wound around the rubber insulator 24. Then, the strip wound metal layer 23 is wound about this adhesive layer followed by winding of additional tape adhesive layer and then strip wound metal layer 25.

After the inner cylindrical strip wound section is wound, the rib section such as honeycomb 28 is layed thereabout. If tape adhesive is used, then this tape is first layed on the outer surface of the inner cylindrical strip wound section prior to adding the rib section. The rib section is formed over this adhesive tape layer and then another adhesive tape layer is layed on the rib section. The outer cylindrical strip wound section such as 30 in Figure 2-6 is then wound about the rib section in the manner as described in connection with the inner cylindrical strip wound section, i.e. alternating layers of metal and adhesive where the adhesive may be coated onto the metal strip as it is layed or added as a separate layer. The outer surface of the final strip wound layer, e.g. strip 15 of Figures 1-6, does not require adhesive.

As an alternative to such tape adhesive that cures at elevated temperature, room temperature adhesives can be used.

These adhesives are coated onto each of the strips and the rib section during the winding operation. Similarly, the cylindrical sleeves are also coated during this operation.

When epoxy or other such high cure temperature tape adhesives are employed, the uncured or partially cured strip wound tubular body is heated to the requisite curing temperature (e.g. above 200°F.) for a time sufficient to cure the adhesive. Use of aluminum mandrels are advantageous in this regard because they expand to a greater extent than heated steel strip wound tubular bodies thereby enabling fascile removal of the tubular body upon cool down after cure. Heating of the aluminum mandrel from within is preferred because the inner cylindrical strip wound section expands first and fixes the rib section, e.g. honeycomb section 28 of Figures 2-6, between the outer and inner cylindrical strip wound sections.

The inner rib section is selected to withstand these curing stresses. For example, the honeycomb 28 of canister barrel 10 has a crush strength of 850 psi with a stabilized compressive strength of 1300 psi. Among the various honeycombs that can be used in practice of this invention are flexible honeycombs with diverse, e.g. hexagonal or rectiliner, cell configurations. Examples of suitable metal honeycombs are the Shapegrip honeycombs from American Cyanamid made of, for example, 5052 or 2025 aluminum and the Hexcel rectilinear honeycombs Flex-Core, Ox-Core and Tube-Core. Stainless steel honeycomb are advantageous from a corrosion standpoint when the strip windings also are made of steel.

Typical cells of the honeycombs suitable for this invention include those with areas between about 0.01 and 0.05 square inches. Moreover, chains, nets, foams and the like of various configurations and cell sizes can be used as the rib section in practice of this invention providing they have adequate crush strengths to withstand cure and meet the requirements of the specific application for the tubular body. For example, rigid plastic foams such as Rohacell from Cyro Industries, a rigid polymethacrylimide foam, can be shaped to serve as the rib section for the tubular bodies of this invention.

When B-staged tape adhesive is used, the adhesive accounts for about 10% by weight of the final tube. Use of liquid adhesives, however, can reduce this amount to about 5% by weight, these percentages being based on a tube having six primed, stainless steel strip wound layers and Shapegrid honeycomb as described in connection with Figure 1-6. In this regard, such a tube has a total of between about 0.040 and 0.060 inch thick of strip wound adhesive resulting from six layers of nominally 0.01 inch thick strip adhesive as layed or between about 0.020 and 0.30 inch thick cured liquid adhesive resulting from six layers of nominally 0.005 inch liquid adhesive as layed.

The use of metal rib sections is advantageous in that there is electrical continuity thereby established between the strip wound sections in the finished tubular bodies thereby. Rib sections fabricated from other materials, e.g. filamentary composite, thermoplastic or thermosetting resins, can also be used where this electrical continuity is unnecessary or otherwise provided for.

The dramatic improvement in strip wound tubes of this invention is illustrated by calculations which show an 800% increase in tube wall buckling resistance in canister barrel 10, described above, with only a 3% weight increase when the honeycomb 28 is 0.125 inches thick and made of Shapegrip hexagonal aluminum honeycomb having a crush strength of 850 psi. This calculation is also based on high strength steel strips (290Ksi ultimate tensile strength) for strips 15, 19, 21, 23, 25 and 27, each of which strips having a thickness of 10 mils.

Example

Using the procedures as above described, a strip wound canister barrel prototype is made. The forward end of the barrel is made to have a four (4) inch long split cylindrical spacer. The spacer is made of grit blasted aluminum and circumferentially banded in place to close the axially extending splitline. The honeycomb material is Shapegrip from American Cyanamid (hexagonal cells) and like the spacer is 0.125 inches thick. The cells of this honeycomb have an area of about 0.025 square inches. The wall thickness of the honeycomb cells is about 3 mils. The aluminum honeycomb is preformed into two 180° half cylindrical sections which result in a cylindrical honeycomb 72 inches long and 20 inches in diameter. The adhesive used is FM53 (American Cyanamid) of 4 inch wide paper covered partially cured epoxy tape adhesive. The high strength steel strips are grit blasted, primed, and 3.96 ± 0.008 inches wide and about 11 mils thick. The finished prototype tube weighs 92 pounds and has a wall thickness of approximately 0.240 inches.

The prototype tube is made using a lathe type strip applicator. The strip contact pressure is 3.28 psig resulting from a 130 lb strip winding tension for each of the six strips in the pair of radially spaced cylindrical sections. The mandrel is aluminum and cure of the adhesive is at 260°F. Some increase in the gap between the adjacent edges of the strip is noted after cure. The gaps of the exterior strips range from zero to about 0.140 inches with a typical gap of 0.070 inches.

After the canister barrel prototype is removed from the mandrel, its ends are cut off. The cut prototype is measured with results shown as follows in Table I.

## TABLE I

### DIMENSION INSPECTION - 20" DIAMETER x 70" LONG STRIP LAMINATE LAUNCH CANISTER

| Station | OD 0° | OD 90° | ID 0° | ID 90° |
|---|---|---|---|---|
| 1.0 | 20.325 | 20.330 | 19.837 | 19.845 |
| 7.0 | 20.339 | 20.325 | 19.840 | 18.853 |
| 13.0 | 20.337 | 20.318 | 19.839 | 19.854 |
| 19.0 | 20.328 | 20.337 | | |
| 35.0 | 20.317 | 20.335 | | |
| 51.0 | 20.320 | 20.316 | | |
| 57.0 | 20.318 | 20.320 | 19.844 | 19.851 |
| 63.0 | 20.323 | 20.316 | 19.840 | 19.850 |
| 69.0 | 20.312 | 20.319 | 19.846 | 19.855 |

Straightness ID:   0° - 0.002
                   90° - 0.002

| Requirement | Actual |
|---|---|
| ID Tolerance ± 0.015 | 19.846 ± 0.009 |
| OD Tolerance ± 0.020 | 20.325 ± 0.014 |

## CLAIMS

1. A cylindrical tubular metal body including a tube formed of a plurality of adhesively bonded layers of helically-wound strip metal, adjacent edges of the metal strip in one layer being displaced with reference to adjacent edges of the strip in an adjacent layer so as to avoid any alignment of mating edges in adjacent layers, characterized in that the outer surface of the tube is surrounded by and adhesively bonded to a cylindrical rib section having a cellular structure, and the rib section is surrounded by a second tube having the same structure as the other tube and having its plurality of strip metal layers helically wound around the rib section, each of the tubes having a radial dimension that is less than that of the rib section and a weight that is greater than that of the rib section.

2. A cylindrical tubular metal body as claimed in claim 1, in which the cellular structure of the rib section adjacent one end of the metal body is replaced by a cylindrical metal sleeve having a wall thickness substantially equal to that of the rib section.

3. A cylindrical tubular metal body as claimed in claim 1 or 2, in which the rib section is a formable metallic honeycomb having hexagonal or rectilinear cells.

4. A cylindrical tubular metal body as claimed in claim 1, 2 or 3, in which the bonding between the tubes and the rib section contains adhesive from a layer of strip wound tape adhesive.

FIG. 1

FIG. 2

FIG. 3

FIG. 4

0106625

FIG. 5

FIG. 6